# EUROPEAN PATENT APPLICATION

(11) **EP 4 414 467 A1**
(43) Date of publication of application: **14.08.2024**
(21) Application number: 24154732.2
(22) Date of filing: 30.01.2024
(51) Int. Cl.: C22B 1/00, B02C 4/02, B02C 4/44, B09B 3/35, C22B 7/00, H01M 10/54

(54) **METHOD FOR RECOVERING ELECTRODE MATERIAL**

(30) Priority: 10.02.2023 JP 2023019319
(71) Applicant: TOYOTA JIDOSHA KABUSHIKI KAISHA, Toyota-shi, Aichi-ken, 471-8571 (JP)
(72) Inventor: YOKOYAMA, Tomohiro, Toyota-shi, 471-8571 (JP)
(74) Representative: D Young & Co LLP

(57) **Abstract**

A method of recovering an electrode material comprising:
providing an electrode laminate, wherein the electrode laminate comprises a current collector foil and an electrode material laminated on at least one surface of the current collector foil;
supplying moisture to the electrode material;
freezing the moisture supplied to the electrode material; and
crushing the electrode material and separating the electrode material from the current collector foil by applying a mechanical impact to the frozen electrode material and blowing a gas.

## Description

### [Technical Field]

The present invention relates to a method for recovering an electrode material.

### [Background of the Invention]

A conventional method of recycling electrode materials includes disassembling the primary battery or the secondary battery such as a lithium ion battery after using it, and recovering and recycling electrode materials such as a positive electrode mixture (positive electrode active material) and a negative electrode mixture (negative electrode active material).

In this context, Patent Literature 1 discloses a method of recovering a catalyst from an object in which a catalyst layer is formed on a surface of an electrolyte membrane or a diffusion layer for a fuel cell. The method includes a step of separating the catalyst from the electrolyte membrane or the diffusion layer by causing a solid particles such as dry ice particles or ice particles to collide with the catalyst layer formed on the surface of the electrolyte membrane or the diffusion layer, and a step of recovering the separated catalyst.

### [Citations List]

### [Patent Literature]

[Patent Literature 1] JP 2006-95367 A

### [Summary of the invention]

### [Technical Problem]

As stated above, a conventional method of recycling electrode materials includes disassembling the primary battery or the secondary battery after using it, and recovering and recycling the electrode material. On the other hand, in the manufacturing stage of the primary battery or the secondary battery, when the electrode laminate is formed by laminating the electrode material on the current collector foil, a defect may occur, and the obtained electrode laminate may be unable to be used. The authors of the present disclosure have found that it is preferable to recover the electrode material from the unusable electrode laminate which is generated during the manufacturing stage of the battery as stated above.

In view of the foregoing, the present disclosure provides a method for recovering an electrode material.

### [Solution to Problem]

### <Embodiment 1>

A method of recovering an electrode material comprising:
providing an electrode laminate, wherein the electrode laminate comprises a current collector foil and an electrode material laminated on at least one surface of the current collector foil;
supplying moisture to the electrode material;
freezing the moisture supplied to the electrode material; and
crushing the electrode material and separating the electrode material from the current collector foil by applying a mechanical impact to the frozen electrode material and blowing a gas thereto.

### <Embodiment 2>

The method according to embodiment 1, wherein the electrode laminate is unwound from an electrode laminate roll on which the electrode laminate is wound and transported in a longitudinal direction.

### <Embodiment 3>

The method according to embodiment 1 or 2, wherein the supplying moisture is carried out by contacting a sponge containing moisture with the electrode material.

### <Embodiment 4>

The method according to any one of embodiments 1 to 3, wherein the freezing of the moisture and the applying the mechanical impact to the electrode material are carried out by passing the electrode laminate relatively between two cooling rollers having irregularities on the surface.

### <Embodiment 5>

The method according to any one of embodiments 1 to 4, wherein touch rolls for adjusting a tension of the electrode laminate are provided on an upstream side of a position at which the moisture is supplied to the electrode laminate and on a downstream side of a position at which the gas is blown to the electrode laminate, and thereby, the tension is applied to the electrode laminate at a position where the moisture is supplied to the electrode laminate, a position where the moisture is frozen, a position where the mechanical impact is applied to the electrode material, and a position where the gas is blown.

### <Embodiment 6>

The method according to any one of embodiments 1 to 5, wherein the gas is dry air, nitrogen gas, or carbon dioxide.

### <Embodiment 7>

The method according to any one of embodiments 1 to 6, wherein the gas is a heated gas.

### <Embodiment 8>

The method according to any one of embodiments 1 to 7, further comprising winding the current collector foil separated from the electrode material with a winding roll, and providing a current collector foil roll.

### [Advantageous Effect of the Invention]

According to the present disclosure, a method of recovering an electrode material can be provided.

### [Brief Description of Drawings]

[Fig. 1] FIG. 1 is a schematic diagram illustrating one embodiment of a method of the present disclosure for recovering an electrode material.
[Fig. 2A] FIG. 2A is a diagram illustrating an electrode laminate.
[Fig. 2B] FIG. 2B is a diagram illustrating supplying moisture to the electrode laminate.
[Fig. 2C] FIG. 2C is a diagram illustrating freezing the moisture in the electrode laminate.
[Fig. 2D] FIG. 2D is diagram illustrating crushing the electrode material and recovering the material.

### [Description of Embodiments]

The method of the present disclosure for recovering an electrode material may be a method for separating and recovering an electrode material of a primary battery or a secondary battery, for example, a lithium-ion primary battery or a secondary battery, from a current collector foil. The electrode material (active material) may be a positive electrode mixture (positive electrode active material) or a negative electrode mixture (negative electrode active material), and in particular, the electrode material may be a positive electrode mixture. Therefore, according to the method of the present disclosure, a positive electrode active material or a negative electrode active material, particularly a positive electrode active material, can be recovered and recycled.

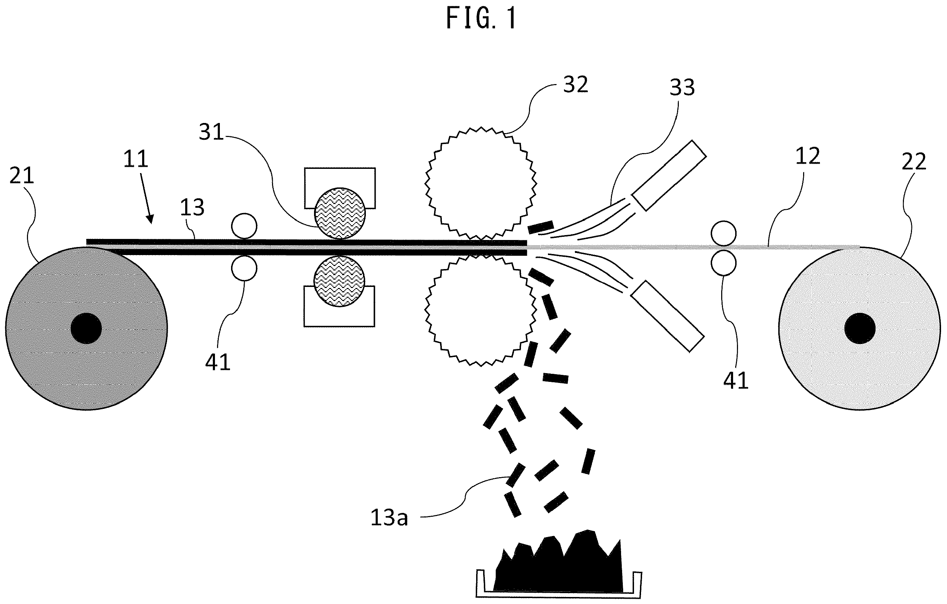

FIG. 1 is a schematic diagram illustrating an embodiment of a method of the present disclosure for recovering an electrode material. Hereinafter, the method of the present disclosure shown in FIG. 1 will be described in detail. However, it should be noted that the method of the present disclosure is not limited to this embodiment.

### (Provide of Electrode Laminate Roll)

In the method of the present disclosure, an electrode laminate 11 is provided. The electrode laminate includes a current collector foil 12 and an electrode material 13 laminated on at least one surface of the current collector foil.

The current collector foil may be, for example, a metal foil containing aluminum. The metal foil may be an aluminum foil, a metal foil such as SUS, Cu, Ni, Fe, Ti, Co or Zn, a foil using a cladding material of a metal such as SUS, Cu, Ni, Fe, Ti, Co or Zn, and Al, or a foil in which Al is coated on a metal surface.

The electrode material may be a positive electrode mixture (positive electrode active material) or a negative electrode mixture (negative electrode active material). In particular, it may be a positive electrode mixture. For example, the positive electrode mixture may include an oxide active material, a sulfide active material, and the like. Further, it may comprise a binder such as PESE (polyethylene sebacate), PPSU (polyphenylsulfone), PBI (polybenzimidazole), PESU (polyethersulfone). Further, the electrode material may comprise a carbon material such as acetylene black, furnace black, channel black, thermal black, activated carbon, carbon, carbon fiber, graphite, and the like.

The electrode laminate 11 may be unwound from the electrode laminate roll 21 and transported in the longitudinal direction. It should be noted that in the context of the present disclosure, the "longitudinal direction" means the length direction of the electrode laminate 11, i.e., the direction in which the electrode laminate 11 is wound on the electrode laminate roll 21.

The unwinding of the electrode laminate from the electrode laminate roll can be carried out by any known method. For example, the electrode laminate can be unwound by rotating the electrode laminate roll using a motor and transported while supporting the unwound electrode laminate with a support roller or while the unwound electrode laminate is suspended in the air.

### (Supplying Moisture to Electrode Material)

In the method of the present disclosure, moisture is supplied to the electrode material.

The supplying moisture may be by spraying, coating, dipping, etc. The moisture may be supplied by bringing the sponge roll 31 containing water into contact with the electrode material.

When the amount of moisture is increased, the electrode material is more likely to be slurried after the electrode material is recovered, and therefore, the amount of moisture in the electrode material is preferably 20% or less. The amount of moisture is defined as the value of 100% minus the solid content percentage measured using a typical solids meter. Wiping may be performed after the moisture is supplied in order to control the amount of moisture.

### (Freezing Moisture)

In the method of the present disclosure, the moisture supplied to the electrode material 13 is frozen.

Freezing can be carried out by means of cooling rollers, cooling plates, cold atmospheres, dry ice, liquid nitrogen, etc. Especially the freezing can be carried out by means of cooling rollers. In this context, the cooling roller and the cooling plate are each a cooled roller and a plate, which can freeze moisture supplied to the electrode material by contacting the electrode material.

By freezing the moisture supplied to the electrode material 13, a large number of cracks is generated in the electrode material due to the volume expansion of the moisture, and the binding of the electrode material can be broken. In addition, the temperature of the electrode laminate drops to a low temperature and the resin component in the electrode material shrinks, cures, and embrittles, whereby crushing of the electrode material and separation of the electrode material from the current collector foil are promoted.

### (Separating Electrode Material)

In the method of the present disclosure, by applying a mechanical impact to the electrode material 13 with frozen moisture and blowing a gas 33 to the electrode material 13, the electrode material 13 is crushed and separated from the current collector foil 12.

The application of the mechanical impact may be performed by scraping by a blade, by vibration, by hitting by shot blasting or the like, by compression by a roll or the like, by vibration or the like.

After a mechanical impact is applied to the electrode material, a gas is blown onto the electrode laminate. By blowing the gas after the mechanical impact is applied, crushing of the electrode material and separation of the electrode material from the electrode laminate can be promoted.

The freezing of the moisture supplied to the electrode material 13 and the application of mechanical impact to the electrode material may be performed at the same time. For example, it may be performed by passing the electrode laminate 11 relatively between the two cooling rollers 32 provided with irregularities on the surface. The relative passage of the electrode laminate 11 may be performed by transporting the electrode laminate 11. The passage of the relative electrode laminate 11 may be performed by moving the two cooling rollers 32. The passage of the relative electrode laminate 11 may be effected by moving both the electrode laminate 11 and the two cooling rollers 32.

By blowing the gas 33 to the electrode material, the electrode material 13 peeled from the current collector foil is separated from the current collector foil. The separated electrode material is blown away by the blown gas, and the current collector foil 12 from which the electrode material is peeled off is only left. In a preferred embodiment, the sprayed gas can promote the vaporization of the moisture contained in the electrode material, together with promoting the separation of the electrode material from the current collector foil, thereby, the moisture content of the resulting electrode material can be reduced. It may be preferable to reduce the moisture content of the obtained electrode material to prevent the obtained electrode material from being slurried.

The gas 33 blown onto the electrode laminate may be dry air, i.e., air which has undergone a process of removing moisture. The gas may be nitrogen, or carbon dioxide. Further, the gas may be a heated gas. In this context, the heating gas does not necessarily mean a high-temperature gas, but means a gas which has been heated to some extent. If the gas is a heating gas, this is preferable, since vaporization of moisture contained in the electrode material is promoted, which facilitates lowering of the moisture content.

These processes may be carried out in an inert gas atmosphere, in particular in a nitrogen atmosphere or in a carbon dioxide atmosphere. When these processes are performed in an inert gas atmosphere, deterioration of the active material contained in the electrode material can be suppressed. In addition, when these processes are carried out in a carbon dioxide active atmosphere, metal lithium or the like contained in the electrode material can be stabilized by carbonation with carbon dioxide.

The electrode material 13a separated from the current collector foil 12 may be dropped and collected separately, for example. The recovered electrode material may then be re-slurried, as is or after a process such as cleaning and refining, by adding a solution such as NMP(N-methyl-2-pyrrolidone) solution, and may be used again for coating the electrode material.

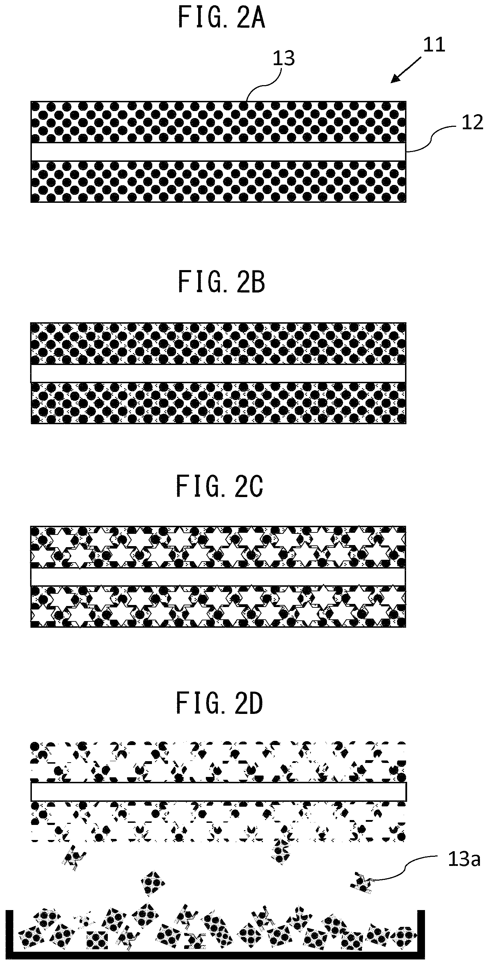

With reference to FIGS. 2A to 2D, supplying moisture to the electrode material, freezing the moisture, applying a mechanical impact to the electrode material, and crushing the electrode material and separating it from the current collector foil are explained. The electrode laminate 11 includes a current collector foil 12 and an electrode material 13 (FIG. 2A). In the method of the present disclosure, moisture is supplied to the electrode material 13 (FIG. 2B). Then, the moisture in the electrode material 13 is frozen. As a result, a large number of cracks are generated in the electrode material due to the volume expansion of the water, and the binding of the electrode material is broken (FIG. 2C). Then, the electrode material 13 is crushed and separated from the current collector foil 12 by applying a mechanical impact to the electrode material 13 in which the moisture is frozen and blowing a gas to the electrode material 13. Thereafter, the material 13a is recovered (FIG. 2D).

### (Application of Tension)

Upstream from the position for supplying the moisture to the electrode laminate 11, and downstream from the position for blowing the gas 33 to the electrode laminate 11, touch rolls 41 for adjusting the tension of the electrode laminate 11 may be provided and tension may be applied to the electrode laminate 11 at the positions for supplying the moisture to the electrode laminate, applying mechanical impact to the electrode laminate, and blowing the gas to the electrode laminate.

Such application of tension is preferable for suppressing flapping of the electrode laminate when the gas is blown.

### (Winding Current Collector Foil)

The current collector foil 12 from which the electrode material is peeled off may be wound by the winding roll 22 to form a current collector foil roll. The wound current collector foil may be reused as a metal foil, since the electrode material is removed.

An embodiment of the present disclosure is described in detail above. However, the present disclosure is not limited to the above-described embodiment, and various design changes can be made without departing from the spirit thereof.

### [Reference Sings List]

11 Electrode laminate
12 Current collector foil
13, 13a electrode-material
21 Electrode laminate roll
22 Winding roll
31 Sponge roll
32 Cooling roller
33 Gas
41 Touch Roll

## Claims

1. A method of recovering an electrode material comprising:
providing an electrode laminate, wherein the electrode laminate comprises a current collector foil and an electrode material laminated on at least one surface of the current collector foil;
supplying moisture to the electrode material;
freezing the moisture supplied to the electrode material; and
crushing the electrode material and separating the electrode material from the current collector foil by applying a mechanical impact to the frozen electrode material and blowing a gas thereto.

2. The method according to claim 1, wherein the electrode laminate is unwound from an electrode laminate roll on which the electrode laminate is wound and transported in a longitudinal direction.

3. The method according to claim 1 or 2, wherein the supplying moisture is carried out by contacting a sponge containing moisture with the electrode material.

4. The method according to any one of claims 1 to 3, wherein the freezing of the moisture and the applying the mechanical impact to the electrode material are carried out by passing the electrode laminate relatively between two cooling rollers having irregularities on the surface.

5. The method according to any one of claims 1 to 4, wherein touch rolls for adjusting a tension of the electrode laminate are provided on an upstream side of a position at which the moisture is supplied to the electrode laminate and on a downstream side of a position at which the gas is blown to the electrode laminate, and thereby, the tension is applied to the electrode laminate at a position where the moisture is supplied to the electrode laminate, a position where the moisture is frozen, a position where the mechanical impact is applied to the electrode material, and a position where the gas is blown.

6. The method according to any one of claims 1 to 5, wherein the gas is dry air, nitrogen gas, or carbon dioxide.

7. The method according to any one of claims 1 to 6, wherein the gas is a heated gas.

8. The method according to any one of claims 1 to 7, further comprising winding the current collector foil separated from the electrode material with a winding roll, and providing a current collector foil roll.
